Europäisches Patentamt

European Patent Office

Office européen des brevets

(19)

(11) Veröffentlichungsnummer : **0 474 969 B1**

(12) **EUROPÄISCHE PATENTSCHRIFT**

(45) Veröffentlichungstag der Patentschrift :
16.03.94 Patentblatt 94/11

(51) Int. Cl.$^5$ : **G01G 19/07**

(21) Anmeldenummer : **91108227.9**

(22) Anmeldetag : **22.05.91**

(54) **Anordnung von Sensoren an dem Fahrwerk eines Fleugzeugs zur Messung von Gewicht und Schwerpunktlage des Flugzeugs.**

(30) Priorität : **13.09.90 DE 4029083**
**18.04.91 DE 4112674**

(43) Veröffentlichungstag der Anmeldung :
**18.03.92 Patentblatt 92/12**

(45) Bekanntmachung des Hinweises auf die
Patenterteilung :
**16.03.94 Patentblatt 94/11**

(84) Benannte Vertragsstaaten :
**DE FR GB IT**

(56) Entgegenhaltungen :
**EP-A- 0 026 446**
**FR-A- 2 520 870**
**FR-A- 2 586 806**

(73) Patentinhaber : **VDO Luftfahrtgeräte Werk GmbH**
**An der Sandelmühle 13**
**D-60439 Frankfurt (DE)**

(72) Erfinder : **Patzig, Hans-Norbert**
**Elisabethenstrasse 36**
**W-6380 Bad Homburg (DE)**
Erfinder : **Schult, Klaus**
**Denil la Barre Strasse 16**
**W-6000 Frankfurt 56 (DE)**

(74) Vertreter : **Gornott, Dietmar, Dipl.-Ing.**
**Zilleweg 29**
**D-64291 Darmstadt (DE)**

## Beschreibung

Die Erfindung betrifft eine Anordnung von Sensoren an dem Fahrwerk eines Flugzeugs zur Messung von Gewicht und Schwerpunktlage des Flugzeugs nach dem Oberbegriff des Anspruchs 1.

Bei derartigen aus der Praxis bekannten Anordnungen werden insbesondere induktive Sensoren der Bauart mit zwei in Serie geschalteten Spulen vorgesehen, die übereinander mit einer gemeinsamen Mittellinie in einem ersten Sensorteil angeordnet sind, sowie mit in einer in den Spulen beweglichen Zunge aus ferromagnetischem Material, die Bestandteil eines zweiten Sensorteils ist. Der erste und der zweite Sensorteil werden jeweils an einem Ansatz eines Paars Ansätzen angebracht, die an der Meßstelle von einer Achse oder einem Drehbalken eines Flugzeugfahrwerks hervorstehen. Die seriell geschalteten Spulen des Sensors wirken als induktiver Spannungsteiler und geben jeweils ein Signal ab, wenn eine Biegelinie der Achse oder des Drehbalkens an der Meßstelle nicht gleichförmig und nicht mittensymmetrisch, d.h. symmetrisch zu der Mittellinie eines Ansätzepaares gekrümmt ist. Die Biegelinie ist dabei die neutrale Linie des durch die Achse oder den Drehbalken dargestellten elastischen Körpers oder eine hierzu parallele Linie. Im Idealfall mißt der Sensor nur die durch die in das Fahrwerk eingeleitete Last hervorgerufene Scherung der Achse oder des Drehbalkens im Bereich der Meßstelle, an der der Sensor angebracht ist.

Abweichend von dem Idealfall entsteht einer der möglichen Meßfehler bei Verwindung (Torsion) und auch bei zusätzlicher Scherung des Fahrwerks, die nicht allein durch die Last hervorgerufen wurden, sondern z.B. dynamisch beim Bremsen oder beim Rollen in Kurven. Diese Verwindung und zusätzliche Scherung des Fahrwerks erfolgen jedoch nicht nur beim Rollen, sondern auch im Stand, wenn beispielsweise das gesamte Fahrwerk oder einzelne Räder uneben stehen. Um die dabei infolge der Torsion der Achse oder des Drehbalkens an der Meßstelle bedingten Meßfehler zu kompensieren, gehört es entsprechend dem Oberbegriff des Anspruchs 1 zum Stand der Technik, je einen Sensor an einem Paar Ansätzen an zwei einander außen gegenüberliegenden Meßstellen der Achse oder des Drehbalkens oder des Stoßdämpfer-Fahrwerkbeins anzubringen. Dadurch sollen beide einander außen gegenüberliegende Sensoren dieser Anordnung eine entgegengesetzt gleiche Auslenkung infolge eines Torsionsmoments, welches an der Achse oder dem Drehbalken auftritt, erfahren. Die Ausgangssignale der beiden Sensoren werden so in einer elektronischen Einrichtung, insbesondere einem Rechner, miteinander verknüpft, daß sich die Auswirkungen des Torsionsmoments auf die beiden Sensoren kompensieren. In der Praxis erfolgt diese Kompensation jedoch nur unvollständig.

Der vorliegenden Erfindung liegt daher die Aufgabe zugrunde, eine Anordnung von Sensoren an dem Fahrwerk eines Flugzeugs zur Messung von Gewicht und Schwerpunktlage des Flugzeugs der eingangs genannten Gattung so weiterzuentwickeln, daß eine verbesserte Kompensation des durch die Torsionsauslenkung hervorgerufenen Meßfehlers erreicht wird.

Diese Aufgabe wird durch die im Anspruch 1 angegebene Erfindung gelöst.

Der Erfindung liegt die Erkenntnis zugrunde, daß die bisher nur begrenzte Kompensation der Torsionsauslenkung durch die übliche Formgebung der Ansätze (lugs) bedingt ist, die insbesondere quaderförmig sind und von ihrer Übergangsstelle zu der Achse oder dem Drehbalken bis zu der entfernten Stirnseite einen annähernd konstanten Umfang oder gleichbleibenden Querschnitt aufweisen, wenn von einer zentralen Befestigungsöffnung in dem Ansatz in der Nähe dessen freier Stirnseite abgesehen wird. Bei der Torsion der Achse oder des Drehbalkens wird die übliche Querschnittsform des Ansatzes an der Übergangsstelle zu der Achse oder dem Drehbalken in einem erheblich größeren Maße verzerrt als an der äußeren Stirnseite. Speziell zeigt sich bei einem rechteckförmigen Querschnitt eine Parallelogrammverzerrung an der Übergangsstelle. Diese Verzerrungen der Querschnittsform der Ansätze wirken sich an den außen einander gegenüberliegenden Meßstellen der Achse oder des Drehbalkens unterschiedlich aus: Bei Überlagerung der durch das Gewicht hervorgerufenen Biegelinie an der Meßstelle ist die eine Meßstelle, die additive Seite, stärker von der Herabsetzung der meßbaren Torsionsauslenkung betroffen als die gegenüberliegende Meßstelle, der subtraktiven Seite.

Durch die Verjüngung der Ansätze an ihren Wurzeln, d.h. Übergangsstellen zu der Achse bzw. dem Drehbalken wird eine Querschnittsverzerrung in den Ansätzen und deren nachteilige Folge auf das Ausgangssignal des Sensors bzw. das Nutzsignal weitgehend vermieden. Wesentlich ist, daß hier allenfalls nur ein geringer Teil der Torsionsauslenkung der Ansätze an der Achse bzw. dem Drehbalken für die Lastmessung verlorengeht, da die Querschnittsverzerrung über die Tiefe der Ansätze minimiert ist.

Gemäß Anspruch 2 sind bei quaderförmigen Ansätzen diese an ihren Wurzeln quer zur Längsrichtung hinterschnitten. Wenn die quaderförmigen Ansätze wie üblich an der Achse bzw. dem Drehbalken ausgerichtet sind, bedeutet dies, daß die Hinterschneidungen an den schmalen Seiten der Ansätze angeordnet sind. Dadurch wird die sonst eintretende Parallelogrammverzerrung der rechteckförmigen Querschnittsform wirksam reduziert, ohne den Ansatz unzulässig zu schwächen. Die Hinterschneidungen werden dabei zweckmäßig mit kleinstmöglichen Radien ausgeführt, damit möglichst einschneidende Verjüngungen bei sonst gleichbleibenden Abmessungen der Ansätze erreicht werden.

Die vollständige Kompensation des durch die Torsionsauslenkung der Achse bzw. des Drehbalkens hervorgerufenen Meßfehlers mit zwei einander außen an der Achse bzw. dem Drehbalken gegenüberliegenden Ansätzen kann nicht nur erfolgen, wenn an den Ansatzpaaren symmetrische induktive Sensoren der eingangs genannten Bauart angebracht sind, sondern auch bei Verwendung im Prinzip gleicher, jedoch unsymmetrischer induktiver Sensoren, die zur Vermeidung eines anderen, aus dem Be- und Entladeeffekt herrührenden Fehlers vorgesehen werden können. Diese unsymmetrischen Sensoren weisen ungleiche Abstände zwischen einer Mittellinie der beiden Spulen, welche durch die sensitiven Mittelpunkte der Spulen geht, und einer Befestigungsstelle des die Spulen enthaltenden ersten Sensorteils einerseits sowie zwischen dieser Mittellinie und einer Befestigungsstelle des zweiten Sensorteils mit der Spule auf. Diese unsymmetrischen Sensoren können so an den Ansatzpaaren einer konischen Achse bzw. eines konischen Drehbalkens befestigt werden, daß ein Gewichtsmeßergebnis, welches aus den Ausgangsgrößen der Sensoren abgeleitet wird, insbesondere nicht durch ein auf die Achse oder den Drehbalken durch die Seitenkräfte an den Reifen eingeleitetes Drehmoment verfälscht wird.

Die erfindungsgemäße Anordnung der Sensoren mit speziell ausgebildeten Ansätzen eignet sich generell für Sensoren mit zwei Sensorteilen, von denen jeder an einem Ansatz eines Paars Ansätzen angebracht ist, wobei der Sensor ein Ausgangssignal ensprechend einer vertikalen Verschiebung zwischen den Ansätzen eines Paars abgibt. Dies können z.B. kapazitive Sensoren sein. Bevorzugt werden jedoch induktive Sensoren der Bauart mit zwei in Serie geschalteten Spulen mit einer in den Spulen beweglichen Zunge aus ferromagnetischem Material eingesetzt.

Die Erfindung wird im folgenden anhand einer Zeichnung mit elf Figuren erläutert. Es zeigen:

Fig. 1    eine Anordnung von vier Sensoren an einem Fahrwerk eines Flugzeugs, welches schematisch von oben gesehen dargestellt ist,

Fig. 2    eine weitere Anordnung von vier Sensoren an einem anderen Fahrwerk, welches ebenfalls schematisch von oben gesehen dargestellt ist,

Fig. 3    einen Längsschnitt durch einen unsymmetrisch ausgebildeten Sensor,

Fig. 4    eine elektrische Schaltungsanordnung des Sensors gemäß Fig. 3,

Fig. 5    eine Anordnung und Ausbildung von Ansatzpaaren zur Befestigung der Sensoren an einer Achse, die von oben gesehen dargestellt ist,

Fig. 6    in schaubildlicher Darstellung ein Paar erfindungsgemäß ausgebildeter Ansätze an einer verdrehten Achse oder einem verdrehten Drehbalken,

Fig. 7    Kennlinien für verschiedene Lastfälle bei konventionell ausgebildeten Ansätzen,

Fig. 8    Kennlinien für verschiedene Lastfälle für erfindungsgemäß ausgebildete Ansätze,

Fig. 9    eine Draufsicht auf ein weiteres Paar erfindungsgemäß hinterschnittener Ansätze,

Fig.10    eine zu Fig. 9 gehörende Seitenansicht und

Fig.11    eine Experimentierachse, an der die Kennlinien gemäß Figuren 7 und 8 ermittelt wurden.

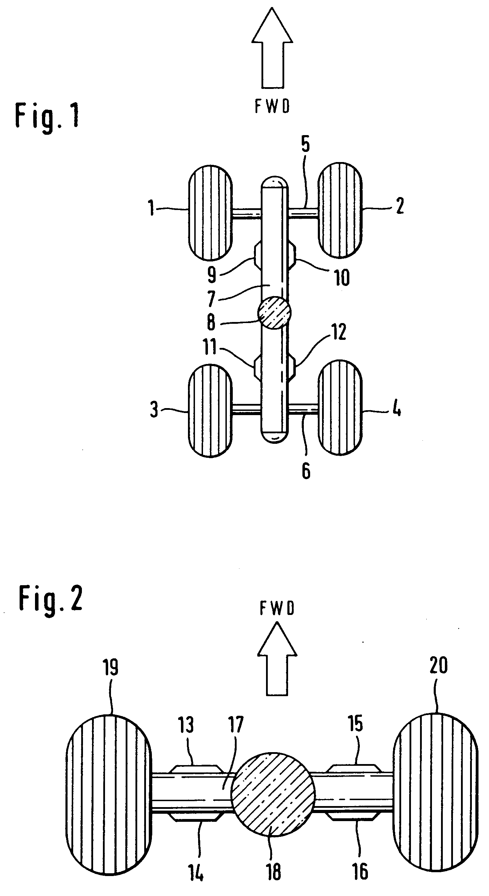

In Fig. 1 ist ein Teil eines Fahrwerks mit zwei Räderpaaren 1, 2 bzw. 3, 4 dargestellt. Die Achsen 5, 6 dieser Räderpaare sind an einem Drehbalken 7 angebracht. Der Drehbalken steht über einen im Querschnitt dargestellten Öl-Stoßdämpfer 8 mit dem Flugzeug in Verbindung. An dem Drehbalken 7 sind vier induktive Sensoren 9 - 12 jeweils paarweise einander gegenüberstehend angeordnet. Je ein Paar Sensoren verkörpert dabei eine Meßstrecke mit zwei Meßstellen des Drehbalkens. An dem rohrförmig ausgebildeten Drehbalken stehen sich die beiden Sensoren 9, 10 bzw. 11, 12 eines Sensorpaares diametral gegenüber.

Fig. 2 zeigt eine andere Anordnung von vier Sensoren 13 - 16, und zwar an einer Achse 17 eines Flugzeugfahrwerks, welches über einen Öl-Stoßdämpfer 18, der ebenfalls im Querschnitt dargestellt ist, mit dem Flugzeug in Verbindung steht. Räder, die an der rohrförmig ausgebildeten Achse gelagert sind, tragen die Bezugszeichen 19, 20. Die Sensoren 13, 14 bzw. 15, 16 je eines Paares sind auch hier einander diametral gegenüberliegend an der Achse angeordnet. Sie befinden sich dabei in gleichem Abstand zu einem gedachten Mittelpunkt des Öl-Stoßdämpfers 18.

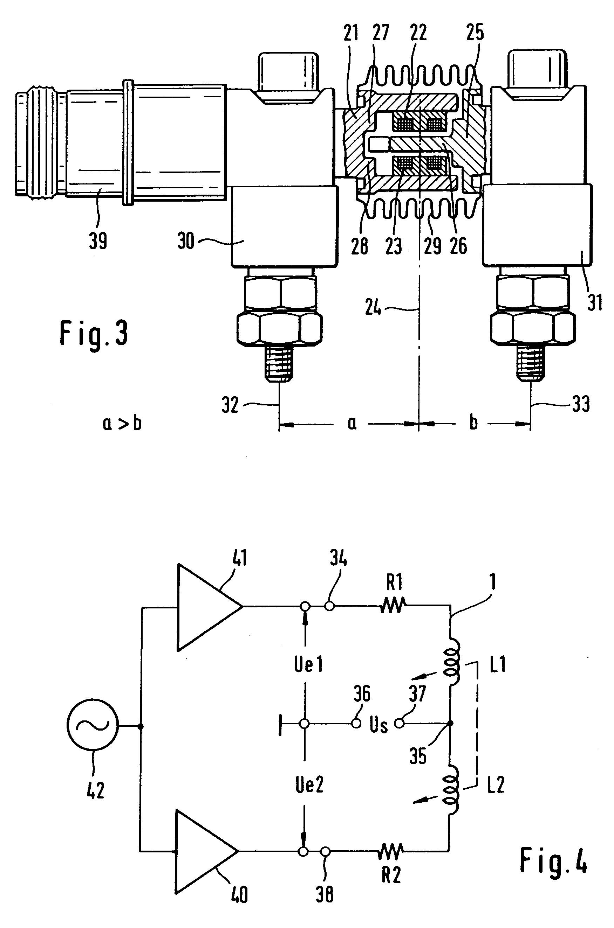

Fig. 3 zeigt einen der Sensoren in einer Seitenansicht teilweise geschnitten. In einem gabelförmigen ersten Sensorteil 21 sind übereinander zwei waagerechte Spulen 22, 23 angeordnet. Eine durch diese Spulen hindurchgehende gemeinsame Mittellinie, die in den sensitiven Mittelpunkten der Spulen liegt, ist strichpunktiert angedeutet und trägt das Bezugszeichen 24. Ein zweiter, in den ersten Sensorteil hineinreichender Sensorteil 25 ist mit einer Zunge aus weichem ferromagnetischem Material 26 ausgestattet, die in einen Zwischenraum zwischen den beiden Spulen 22 und 23 in dem ersten Sensorteil hineinreicht. Die Zunge ist in diesem Raum in jeder Richtung beweglich, solange sie nicht an Anschläge 27, 28 anstößt. Der Innenraum des ersten und des zweiten Sensorteils ist durch einen beide Sensorteile miteinander verbindenden Balgen 29 gegenüber Umwelteinflüssen abgeschirmt. - Aus Fig. 3 geht ferner hervor, wie der erste Sensorteil 21 und der zweite Sensorteil 25 an jeweils einem Ansatz 30 bzw. 31 angeschraubt ist. Eine gedachte zentrale Befestigungstelle jeder dieser Schraubverbindungen ist strichpunktiert angedeutet und mit 32 bzw. 33 bezeichnet.

Der in Fig. 3 dargestellt Sensor ist unsymmetrisch ausgebildet, und zwar ist ein Abstand a zwischen der Befestigungsstelle 32 des ersten Sensorteils 21 und der Mittellinie 24 durch die beiden Spulen einerseits größer als ein Abstand b zwischen der Befestigungsstelle 33 des zweiten Sensorteils 25 und der Mittellinie 29 durch die beiden Spulen andererseits.

Alternativ dazu kann in einer anderen Ausführungsform auch der Abstand a kleiner sein als der Abstand b.

Die unsymmetrischen Sensoren sind bevorzugt zum Anbau an eine Achse bzw. an einen Drehbalken vorgesehen, der in üblicher Weise und entgegen den Darstellungen in Fig. 1 und Fig. 2 konisch ausgebildet ist.

Bei rohrförmig bzw. als Hohlzylinder geformter Achse oder Drehbalken als Anbringungsort der paarweise gruppierten Sensoren gemäß den Figuren 2 und 1 dienen hingegen symmetrische Sensoren, bei denen die Abstände a und b untereinander gleich sind.

Unabhängig davon ob es sich um einen symmetrischen oder einen unsymmetrischen Sensor handelt, bildet dieser Ausgangssignale nach dem Prinzip einer induktiven Spannungsteilung an den beiden in Reihe geschalteten Spulen 22 und 23 in Abhängigkeit von der Stellung der Zunge 26. Im einzelnen mißt der Sensor die vertikale Lage der Zunge 26 zwischen den beiden Spulen 22 und 23 bzw. einen Höhenversatz gegenüber der dargestellten mittleren Ausgangslage. Ein bloßes Schwenken der Zunge um einen gedachten Mittelpunkt, der in der Mittellinie 24 liegt, oder eine horizontale Verschiebung haben keinen Einfluß auf die Ausgangsgrößen des Sensors.

Der Sensor der in Fig. 3 dargestellten Bauart, ob unsymmetrisch oder symmetrisch, wird auch als Scherkraftsensor bezeichnet, weil er mit dem Höhenversatz der Zunge 26 gegenüber den Spulen 22 und 23 die Scherkraft mißt, die an der Achse oder dem Drehbalken auftritt, mit welcher der Sensor über die Ansätze 30 und 31 verbunden ist. Hingegen erfährt der Sensor keine Auslenkung, wenn die Achse oder der Drehbalken im Bereich der Ansätze keine Krümmung der neutralen Linie oder Biegelinie aufweist oder wenn die Krümmung gleichförmig oder mittensymmetrisch ist.

Eine Schaltungsanordnung, in der ein Sensor gemäß Fig. 3 angeordnet ist, zeigt Fig. 4. Hierin sind Anschlüsse mit 34,36 - 38 bezeichnet, die in Fig. 3 in einer Anschlußdose 39 sitzen. In Fig. 4 ist der Sensor als Ersatzschaltbild dargestellt. Die wirksamen Induktivitäten der beiden (am Punkt 35 zusammengeschalteten) Spulen 22 und 23 in Fig. 3 sind mit L1 und L2 bezeichnet. Diese Induktivitäten sind durch die Zunge 26 gegenläufig beeinflußbar, was in Fig. 4 mit den durch eine unterbrochene Linie verbundenen Pfeilen angedeutet ist. R1 und R2 sind Ersatzwiderstände, welche die Ohm'schen Widerstände der Spulen 22 und 23 sowie deren Zuleitungen repräsentieren. Die beiden Spulen werden durch Verstärker 40 und 41, die von einer Wechselspannungsquelle 42 angesteuert werden, mit gegenphasigen Erregerspannungen Ue1 bzw. Ue2 beaufschlagt. Eine Ausgangsspannung oder Sensorspannung Us zwischen den Anschlüssen 36 und 37 ist ein Maß für die Verstellung der Zunge, welche den Betrag der Induktivitäten L1 und L2 beeinflußt.

Zum Ausgleich der torsionsmomentbedingten Fehler sind jeweils zwei Sensoren eines Paares, beispielsweise die Sensoren 13, 14 oder 15, 16 in Fig. 2, ausgangsseitig so miteinander verknüpft, daß das auf der betreffenden Halbachse der Achse 17 ruhende Gewicht wt gemessen wird gemäß der Beziehung:

$$wt_{Achse} = A_1 \cdot m_1 + A_2 \cdot m_2$$

Darin sind $A_1$ und $A_2$ Auslenkungen des ersten Sensors und des zweiten Sensors sowie $m_1$ und $m_2$ die dazugehörigen Skalierungsfaktoren. Die numerische Größe für das Gewicht $wt_{Achse}$ kann durch einen festverdrahteten Rechner oder einen programmierbaren Rechner gebildet werden.

Bei der obengenannten Verknüpfung der Sensorauslenkungen $A_1$ und $A_2$ der paarweise angeordneten Sensoren, beispielsweise 13, 14 bzw. 15,16 in Fig. 2, bei denen zwei Sensoren eines Paars genau einander gegenüber liegen, werden die torsionsmomentbedingten gegenseitigen Auslenkungen der Zunge gegenüber den Spulen innerhalb des Rechners weitgehend kompensiert.

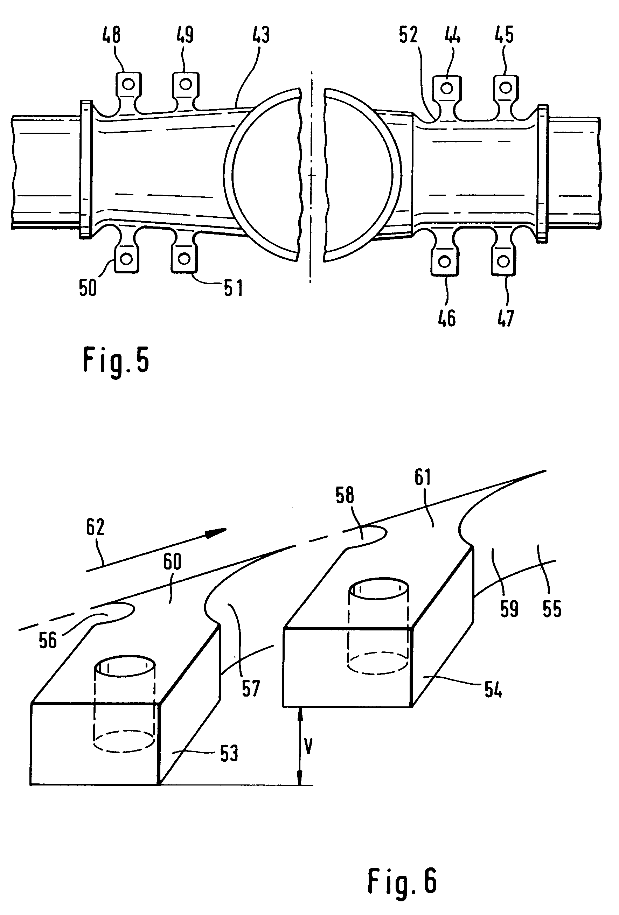

Damit die Kompensation möglichst vollkommen ist, sind die Ansätze, wie in den Figuren 5 und 6 dargestellt, hinterschnitten.

In Fig. 5 ist eine Achse 43 dargestellt, deren linker Teil in konventioneller Weise konisch ausgebildet ist, deren rechter Teil jedoch im Bereich von Ansätzen 44 - 47 zum Unterdrücken von Be- und Entladeeffekten zylindrisch ist. Wenn nur der linke konische Teil der Achse realisiert ist, werden an Ansätzen 48 - 51 dieses Teils bevorzugt unsymmetrische Sensoren zum Unterdrücken von Be- und Entladeeffekten montiert.

Es wird an je einem Paar der Ansätze 44,45; 46,47; 48,49; 50, 51 ein Sensor befestigt wie in Fig. 3 dargestellt. Um die bei dieser paarweisen Sensoranordnung ermöglichte Kompensation von torsionsmomentbedingten Fehlern zu optimieren, sind die Ansätze an ihren Übergangsstellen zu der Achse verjüngt bzw. hinterschnitten. Eine solche Verjüngung an dem Ansatz 44 in Fig. 5 ist mit 52 bezeichnet. Genauer geht die Form und Lage der Verjüngung aus den Fig. 6, 9 und 10 hervor. In Fig.6 sind zwei Ansätze 53 und 54 an einer nur ausschnittsweise dargestellten Achse 55 im torsionsverdrehten Zustand der Achse dargestellt. Aus Fig. 6 ergibt sich weiterhin die annähernd quaderförmige Grundform der Ansätze, die jedoch durch Hinterschneidungen 56 -59 an ihren Wurzeln 60,61 variiert ist. Die Wurzeln stellen dabei die Übergangsstellen der Ansätze zu der Achse dar. Es ist ersichtlich, daß die weiteren Seiten der Ansätze annähernd parallel zu einer Längsrichtung der Achse verlaufen, die mit einem Pfeil 62 angedeutet ist. Infolge einer Belastung der Achse durch das Gewicht des Flugzeugs und einer, beispielsweise durch Bremsen oder im Stand bei angezogener Bremse verdrehten Achse sind die Ansätze 53,54 um einen Höhenabstand V gegeneinander versetzt. Dieser Versatz ist verhältnismäßig groß und kann zur Kompensation des torsionsmomentbedingten Fehlers genutzt werden, weil die Ansätze 53, 54 im Bereich ihrer Wurzeln nicht, wie ohne Hinterschneidungen, durch die Verdrehung der Achse erheblich verformt oder verzerrt sind. Die Hinterschneidungen sind als Rundungen mit möglichst kleinen Radien ausgebildet, damit diese Hinterschneidungen bei gegebener Tiefe der Ansätze möglichst einschneidend sind. In der in Fig. 6 dargestellten Konfiguration ist das Ausgangssignal des Sensors, der an den Ansätzen 53,54 befestigt ist, linear oder proportional der Torsionsauslenkung. Der von der Gewichtsverbiegung der Achse herrührende Anteil der Höhenversetzung V kann weitgehend fehlerfrei gemessen werden.

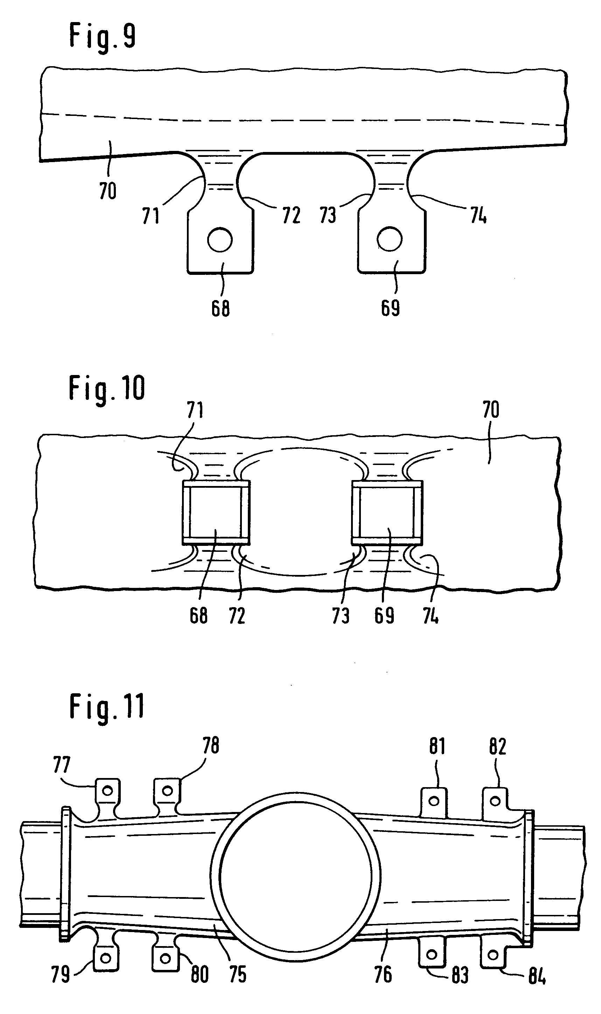

In den Fig. 9 und 10 ist ein weiteres Paar Ansätze 68,69 an einem Achsenausschnitt 70 dargestellt, die tiefe zylindrische Hinterschneidungen 71-74 aufweisen.

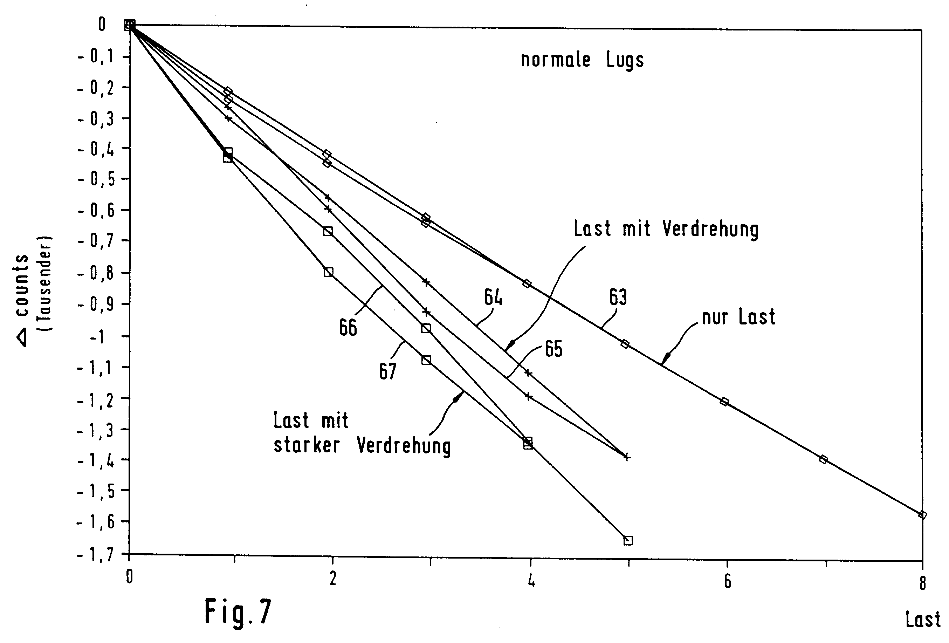

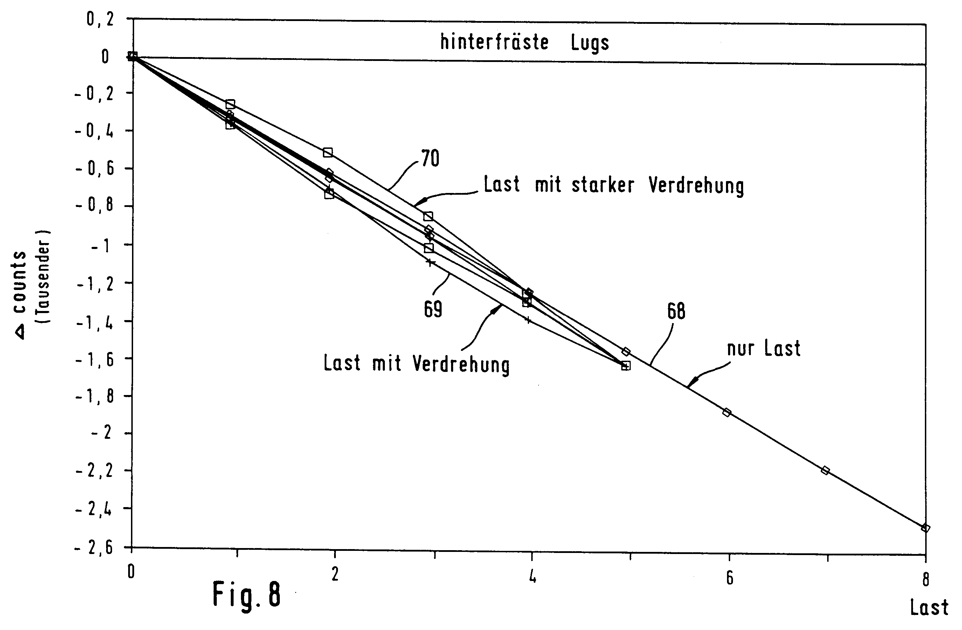

Die überraschende Wirkung der Hinterschneidungen der Ansätze, die an einer Experimentierachse gemäß Fig. 11 ermittelt wurde, ist in den Fig. 7 und 8 verdeutlicht. In Fig. 11 ist die Experimentierachse mit einer konischen linken Achshälfte 75 und einer ebenfalls konischen rechten Achshälfte 76 dargestellt. Jede der beiden Achshälften 75,76 weist an einander diametral gegenüberliegenden Stellen Paare von Ansätzen 77,78; 79,80; 81,82; 83,84 auf, von denen die Ansätze 77,78; 79,80 an der linken Achshälfte im Unterschied zu den Ansätzen 81,82; 83,84 der sonst baugleichen rechten Achshälfte hinterfräst sind.

In Fig. 7 ist die Abhängigkeit des aus den Ausgangsgrößen eines Sensorpaars zusammengesetzten Meßwerts in Δ counts, also Zählimpulsen in Abhängigkeit von der Last dargestellt, wobei das Sensorpaar an den nicht hinterfrästen Ansätzen 81 - 84 der rechten Achshälfte 76 angebracht ist. Eine Kennlinie 63 wurde nur unter Last, jedoch ohne Verdrehung des Fahrwerks gemessen. Sie ist annähernd eine Gerade. Die Kennlinien 64 und 65 wurden dagegen unter gleichzeitiger Torsion von Fahrwerksteilen, an denen die Sensoren angebracht sind, insbesondere der Achse, gemessen. Diese Kennlinien zeigen eine deutliche Abweichung von der Kennlinie ohne Torsion des Fahrwerks.

Noch größer sind die Abweichungen bei Kennlinien 66,67, bei denen Teile des Fahrwerks stark verdreht sind.

Der Fig. 8 liegt die linke Achshälfte 75 mit einem Sensorpaar, dessen Ausgangsgrößen miteinander zur Kompensation des torsionsbedingten Fehlers verknüpft sind, an den an ihren Wurzeln hinterfrästen Ansätzen 77-80 zugrunde. Fig. 8 zeigt ein wesentlich besseres Verhalten des resultierenden Meßwerts, der wieder in Δ counts gemessen wird, in Abhängigkeit von der Last und weitgehend unabhängig davon, ob nur im reinen Lastfall oder bei gleichzeitiger, mehr oder weniger starker Verdrehung von Fahrwerksteilen ermittelt wurde. Die Kennlinie für den reinen Lastfall ist mit 68 bezeichnet. Eine Kennlinie 69, bei der gleichzeitig Fahrwerksteile, an denen die Sensoren angebracht sind, verdreht werden, sowie eine Kennlinie 70 für stärkere Verdrehung von Fahrwerksteilen, verlaufen nahe der reinen Lastkennlinie 68. Abweichungen der Meßwerte von der reinen Lastkennlinie 68 sind bei den verschiedenen Torsionsfällen von Fahrwerksteilen erheblich kleiner als bei entsprechenden Messungen unter Verwendung normaler, nicht hinterschnittener Ansätze.

## Patentansprüche

1.  Anordnung von Sensoren am Fahrwerk eines Flugzeugs zur Messung von Gewicht und Schwerpunktlage des Flugzeugs, wobei zur Kompensation von torsionsmomentenbedingten Fehlern je ein Sensor (13,14) an einem Paar Ansätzen (44,45;46,47) an zwei einander außen gegenüberliegenden Meßstellen einer Achse (17), eines Drehbalkens (7) oder eines Stoßdämpfer-Fahrwerkbeins (18) angebracht ist und wobei die Sensoren (13,14) je eine elektrische Ausgangsgröße entsprechend einer vertikalen Verschiebung zwischen den Ansätzen (44,45;46,47) eines Paars abgeben,
    **dadurch gekennzeichnet,**
    daß die Ansätze (44,45;46,47) an ihren Wurzeln verjüngt sind.

2.  Anordnung nach Anspruch 1,
    **dadurch gekennzeichnet,**
    daß quaderförmige Ansätze (53,54) an ihren Wurzeln (60,61) quer zur Längsrichtung (62) hinterschnitten sind.

3. Anordnung nach Anspruch 1 oder 2,
**dadurch gekennzeichnet,**
daß als Sensoren induktive Sensoren der Bauart mit zwei in Serie geschalteten Spulen (22,23) in einem ersten Sensorteil (21) sowie mit einer in den Spulen beweglichen Zunge (26) aus ferromagnetischem Material, die Bestandteil eines zweiten Sensorteils (25) ist, vorgesehen sind.


## Claims

1. An arrangement of sensors on the landing gear of an aircraft for measuring the weight and the position of the centre of gravity of the aircraft, wherein, to compensate for errors caused by torsional moments, a sensor (13, 14) is provided on each pair of lugs (44, 45; 46, 47) on two externally opposite measuring points of an axle (17), of a rotary beam (7) or of a landing gear shock absorber leg (18), and wherein the sensors (13, 14) each provide an electrical output signal corresponding to a vertical displacement between the lugs (44, 45; 46, 47) of a pair, characterised in that the lugs (44, 45; 46, 47) are diminished at their roots.

2. An arrangement according to claim 1, characterised in that the cuboid-shaped lugs (53, 54) are undercut at their roots (60, 61) transverse to the longitudinal direction (62).

3. An arrangement according to claim 1 or 2, characterised in that inductive sensors are provided as the sensors, of the type of construction with two coils (22, 23) connected in series in a first sensor part (21) and with a tongue (26) of ferromagnetic material which can move in the coils and which is a component of a second sensor part (25).


## Revendications

1. Agencement de capteurs sur le train d'atterrissage d'un avion pour mesurer le poids et déterminer la position du centre de gravité de cet avion, agencement dans lequel, pour compenser les erreurs dues au couple de torsion, un capteur (13, 14) est monté sur chaque couple de pattes (44, 45 ; 46, 47) disposés à deux points de mesure situés extérieurement de part et d'autre d'un essieu (15), d'un pivotant (7) ou d'une jambe à amortisseur (18) de chocs et dans lequel ces capteurs (13, 14) délivrent chacun une grandeur électrique de sortie correspondant au déport vertical entre les pattes (44, 45 ; 46, 47) d'un couple, agencement caractérisé en ce que les pattes (44, 45 ; 46, 47) sont dégagées ou réduites à leur base.

2. Agencement selon la revendication 1, caractérisé en ce que des pattes (53, 54) en forme de parallélogrammes sont dégagées à leur base (60, 61) perpendiculairement à la direction longitudinale (62).

3. Agencement selon la revendication 1 ou 2, caractérisé en ce qu'il est prévu comme capteurs des capteurs inductifs du type comportant, dans un premier élément (21), deux bobines (22, 23) connectées en série ainsi qu'une languette (26), en un matériau ferromagnétique, mobile dans ces bobines et faisant partie d'un second élément (25) du capteur.

Fig.1

FWD

Fig.2

FWD

**Fig.3**

21 27 22 25

39 30 28 23 29 26 31

24

32 33

a > b

a    b

41 34 R1 1

Ue1

Ue2

L1

36 37

Us

35

L2

42

40 38 R2

**Fig.4**

**Fig.5**

**Fig.6**

Fig.7

normale Lugs

Last mit Verdrehung

64  63

nur Last

66

67  65

Last mit
starker Verdrehung

Δ counts (Tausender)

Last

EP 0 474 969 B1

**Fig. 8**

hinterfräste Lugs

70
Last mit starker Verdrehung

69
Last mit Verdrehung

68
nur Last

Δ counts (Tausender)

Last

EP 0 474 969 B1

## Fig.9

70  71  72  73  74

68  69

## Fig.10

71  70

68  72  73  69  74

## Fig.11

77  78  81  82

79  80  75  76  83  84